# EUROPÄISCHE PATENTSCHRIFT

(11) **EP 1 444 306 B1**
(45) Veröffentlichungstag und Bekanntmachung des Hinweises auf die Patenterteilung: **04.04.2007**
(21) Anmeldenummer: 02792753.2
(22) Anmeldetag: 12.11.2002
(51) Int. Cl.: C09J 11/04, C08K 9/04

(54) **HÄRTBARE UND WIEDER LÖSBARE KLEBEVERBINDUNGEN**
CURABLE BONDED ASSEMBLIES CAPABLE OF BEING DISSOCIATED
ASSEMBLAGES COLLES DURCISSABLES ET DISSOCIABLES

(30) Priorität: 13.11.2001 DE 10155614; 12.03.2002 DE 10210661
(43) Veröffentlichungstag der Anmeldung: 11.08.2004
(73) Patentinhaber: Degussa GmbH, 40474 Düsseldorf (DE); Fraunhofer-Gesellschaft zur Förderung der angewandten Forschung e.V., 80686 München (DE)
(72) Erfinder: KOLBE, Jana, 28215 Bremen (DE); KOWALIK, Thomas, 28207 Bremen (DE); POPP, Matthias, 28211 Bremen (DE); SEBALD, Monika, 28357 Bremen (DE); SCHORSCH, Oliver, 28205 Bremen (DE); HEBERER, Stefan, 63571 Gelnhausen (DE); PRIDÖHL, Markus, 63538 Grosskrotzenburg (DE); ZIMMERMANN, Guido, 63454 Hanau (DE); HARTWIG, Andreas, 27721 Ritterhude (DE); BORN, Erwin, 28359 Bremen (DE)
(86) Internationale Anmeldenummer: PCT/EP2002/012610
(87) Internationale Veröffentlichungsnummer: WO 2003/042315

(56) Entgegenhaltungen:
- WO-A-01/30932
- WO-A-02/13580
- WO-A-97/38058

## Beschreibung

### Technisches Gebiet

Die Erfindung betrifft eine Klebstoffzusammensetzung nach dem Oberbegriff des Hauptanspruches, die induktiv erwärmbare Füllstoffpartikel enthält, deren Verwendung und ein Verfahren zu ihrer Härtung. Die Erfindung betrifft ferner einen Adhäsivverbund, der eine ausgehärtete Schicht der Klebstoffzusammensetzung aufweist, ein Verfahren zum thermischen Lösen der ausgehärteten Klebstoffzusammensetzung und die Verwendung dieses Verfahrens.

### Stand der Technik

Adhäsive Verbindungen, also insbesondere Klebverbindungen, Lackierungen, Laminate oder vergossene Bauteile werden so konzipiert, dass sie unter milden Bedingungen herstellbar sind, möglichst lange beständig sind und möglichst hohe Festigkeiten aufweisen. Hohe Festigkeiten haben zur Folge, dass im Falle einer Reparatur oder des Recyclings ein Lösen der adhäsiven Verbindung nur unter extremen Bedingungen erfolgen kann wie z.B. hohe Krafteinwirkung oder hohe Temperatur. Klebverbindungen auf der Basis von Haftklebstoffen sind im Allgemeinen lösbar, aber nicht geeignet, die für strukturelle Klebverbindungen erforderlichen hohen Kräfte zu übertragen. Das Lösen von Klebverbunden mit hohen Festigkeiten wird üblicherweise durch mechanische Energie oder chemische Agenzien bewerkstelligt. Letztere haben den Nachteil, dass sie eine hohe Umweltbelastung verursachen und außerdem, dass das Eindringen der Agenzien in die Klebfugen von strukturellen, langzeitbeständigen Klebverbindungen viel zu lange dauert.

Die DE 43 28 108 A beschreibt das Lösen von Fußbodenbelägen mit Hilfe von Mikrowellenenergie. Hierzu wird ein Kontaktklebstoff verwendet, der elektrisch leitfähig ist und mit Kupfer- oder Aluminiumpulver gefüllt ist. Diese Füllstoffe haben den Nachteil, dass die Teilchen Größen von einigen Mikrometern und größer aufweisen. Dies führt zu einer ungleichmäßigen Erwärmung des Kontaktklebstoffs.

Die DE 199 61 940 A1 beschreibt Klebstoffe für lösbare Klebverbindungen, die thermisch aktivierbare Substanzen enthalten, die bei Zersetzung gasförmige Stoffe abspalten, welche dann die Klebverbindungen zerstören. Dieses Verfahren hat den Nachteil, dass zum Trennen des Verbundes das gesamte Bauteil bzw. die Fügeteile und der Klebstoff erwärmt werden müssen. Dies ist mit einem hohen Energieaufwand verbunden. Weiterhin ist es nicht möglich, eine lokal begrenzte Trennung des Bauteils bzw. des Fügeteils zu erzielen.

Die DE 199 51 599 A1 und die DE 199 24 138 A1 beschreiben Klebstoffe für lösbare Klebverbindungen und damit hergestellte Klebverbindungen, die von außen anregbare Nanofüllstoffe enthalten. Das Lösen der Klebverbindungen erfolgt durch Einbringen in ein elektrisches, magnetisches oder elektromagnetisches Wechselfeld wodurch die Nanofüllstoffe und der umgebende Klebstoff erwärmt werden. Dieses Verfahren hat jedoch den Nachteil, dass es zur Erwärmung des gesamten Klebstoffes kommt - auch an Stellen an denen keine Erwärmung nötig oder erwünscht ist, da sich die anregbaren Nanofüllstoffe auch an Stellen des Klebstoffs oder Primers befinden, an denen eine Erwärmung zum gezielten Lösen der Klebverbindung nicht erforderlich ist. Weiterhin werden zum Trennen von Klebverbindungen mit hoher Festigkeit hohe Temperaturen benötigt, da chemische Bindungen zum Lösen des Verbundes gebrochen werden müssen. Die beschriebenen Verfahren haben daher weiterhin den Nachteil, dass beim Trennen von Klebverbindungen mit hoher Festigkeit eine unspezifische thermische Zersetzung des Klebstoffes und/oder Primers auftritt. Sie sind daher insbesondere für Duromere ungeeignet.

Die Herstellung beständiger adhäsiver Verbindungen mit hoher Festigkeit erfolgt üblicherweise thermisch oder photochemisch. Die herkömmlichen Verfahren zum Herstellung adhäsiver Klebverbindungen haben aber den Nachteil, dass das gesamte Bauteil erwärmt werden muss, um den Klebstoff auszuhärten. Dies hat zur Folge, dass der Prozeß energie- und zeitaufwendig ist.

Die WO 99/03306 und O. Hahn, A. Kaimann in Adhäsion - kleben und dichten, 10/2001, S. 35 - 38 beschreiben ein Verfahren zur induktiven Aushärtung von adhäsiven Verbindungen. Hierbei werden Klebstoffe, die induktiv aktivierbare Füllstoffe enthalten, in ein elektromagnetisches Feld eingebracht, wobei die induktiv aktivierbaren Füllstoffe erwärmt werden und die Aushärtung des die Füllstoffe umgebenden Klebstoffes stattfinden kann. Diese Verfahren haben jedoch den Nachteil, dass die induktiv aktivierbaren Substanzen unregelmäßig über den Klebstoff verteilt sind und es somit zu einer inhomogenen Erwärmung des Klebstoffes kommt. Dies hat zur Folge, dass die Festigkeit derartiger adhäsiver Verbindungen begrenzt ist. Die Verfahren haben weiterhin den Nachteil, dass es während des induktiven Erwärmungsprozesses zu einer Entmischung im Klebstoff kommen kann und die Verteilung der thermisch aktivierbaren Substanzen im Klebstoff noch ungleichmäßiger wird.

### Darstellung der Erfindung

Aufgabe der vorliegenden Erfindung ist es, die Nachteile des Standes der Technik zu überwinden und eine Klebstoffzusammensetzung anzugeben, die unter milden Bedingungen zu einer beständigen adhäsiven Verbindung mit hoher Festigkeit gehärtet werden kann. Eine weitere Aufgabe der vorliegenden Erfindung ist es, ein Verfahren zum Lösen derartiger adhäsiver Verbindungen anzugeben ohne, dass die Langzeitbeständigkeit der adhäsiven Verbindung darunter leiden muss.
Diese Aufgaben werden durch die Klebstoffzusammensetzung nach den Ansprüchen 1 und 11, das Verfahren zu deren Härtung nach Anspruch 18, den Adhäsivverbund nach Anspruch 19 und das Verfahren zum thermischen Lösen der ausgehärteten Klebstoffzusammensetzung nach den Ansprüchen 22 und 23 gelöst. Die Ansprüche 17 und 24 geben Verwendungen der Klebstoffzusammensetzung bzw. des Verfahrens zum Lösen der ausgehärteten Klebstoffzusammensetzung an. Die Unteransprüche lehren vorteilhafte Weiterbildungen.

Es wurde gefunden, dass Klebstoffzusammensetzungen, die ein Polymer, ein Polymergemisch oder ein Reaktionsharz, sowie Vernetzerpartikel enthalten, mittels eines elektrischen Feldes, magnetischen Feldes, elektromagnetischen Feldes, elektrischen Wechselfeldes, magnetischen Wechselfeldes oder elektromagnetischen Wechselfeldes erwärmbar sind. Die Vernetzerpartikel bestehen dabei aus Füllstoffpartikeln, die metallisch, ferromagnetisch, ferrimagnetisch, superparamagnetisch oder paramagnetisch sind, sowie Vernetzereinheiten, die chemisch an die Füllstoffpartikel gebunden ist.
Durch induktive Erwärmung der Vernetzerpartikel wird eine chemische Reaktion zwischen der Vernetzereinheit und dem Polymer bzw. dem Polymergemisch ausgelöst wobei ein Polymernetzwerk entsteht.

Klebstoffzusammensetzungen im Sinne der vorliegenden Erfindung sind insbesondere Klebstoffe, Lacke, Primer, Vergussmassen, Dichtstoffe und Laminierharze.
Durch Aushärtung dieser Klebstoffzusammensetzungen entstehen daher insbesondere Klebverbindungen, lackierte oder mit einem Primer versehene Bauteile, vergossene Bauteile, abgedichtete Bauteile oder Polymerlaminate. Als Polymere, Polymergemische und Reaktionsharze im Sinne der vorliegenden Erfindung können daher alle für die genannten Anwendungen geeigneten Polymere, Polymergemische und Reaktionsharze angesehen werden. Bevorzugt sind vernetzte Polymere, besonders bevorzugt Polymere oder Reaktionsharze, aus denen strukturelle oder semistrukturelle Verbindungen hergestellt werden können. Insbesondere sind Epoxidharze, Polyurethane, Acrylate, Phenolharze, Polysulfide oder Melaminharze geeignet.
Erfindungsgemäß sind die Füllstoffpartikel chemisch an die Vernetzerkomponente gebunden. Diese chemische Bindung kann ionischer, koordinativer oder kovalenter Natur sein. Dazu gehören beispielsweise auch van-der-Waals-Wechselwirkungen.

Um die erfindungsgemäßen chemischen Bindungen herzustellen ist es vorteilhaft, wenn die Füllstoffpartikeloberflächen oberflächenmodifiziert sind, d. h. auf ihrer Oberfläche funktionelle Gruppen tragen, die mit funktionellen Gruppen der Vernetzereinheit leicht reagieren können. Die Vernetzereinheit ihrerseits trägt mindestens eine funktionelle Gruppe, die bei Erwärmung Vernetzungsreaktionen mit dem Polymer, dem Polymergemisch oder dem Reaktivharz eingehen. Die Erwärmung kann hierbei entweder induktiv oder auch nach herkömmlicher Art thermisch erfolgen. Als funktionelle Gruppen, die Verneztungsreaktionen eingehen, sind beispielsweise Epoxid-, Amino-, Thiol-, Alkohol-, Acrylat-, Methacrylat- oder Vinylgruppen geeignet.

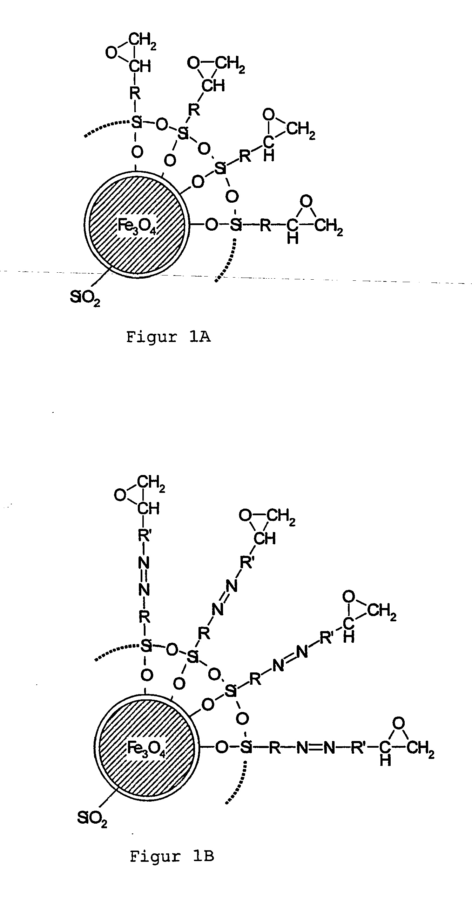

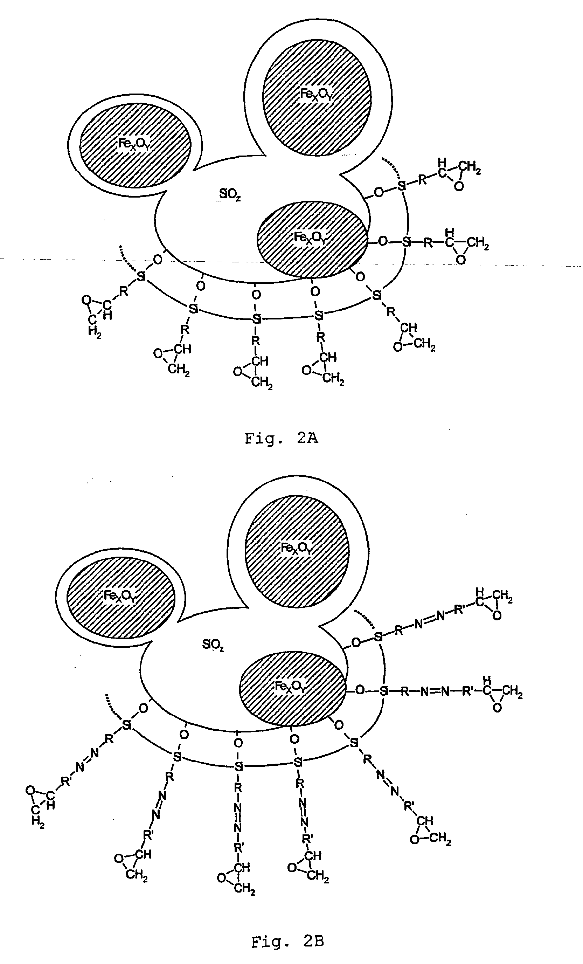

An die Vernetzereinheit gebundene chemische Gruppen, die mit der Füllstoffoberfläche reagieren können, sind insbesondere Alkoxysilane, Alkoxytitanate und Alkoxyzirkonate. Diese führen zu einer Anbindung an die üblicherweise metallische oder oxidische Oberfläche der Füllstoffpartikel.
Füllstoffpartikel, bestehend aus induktiv anregbaren Materialien im Inneren der Partikel sowie einer Partikeloberfläche überwiegend aus Siliciumdioxid, sind besonders bevorzugt. Sie können in sphärischer oder aggregierter Form, eingesetzt werden. Die überwiegend sphärischen Füllstoffpartikel mit Kern-Schale-Struktur (siehe Fig. 1A, Fig. 2A) lassen sich z.B. über Sol-Gel-Prozesse oder aus der Reaktion von nanoskaligem Eisenoxid mit Natronwasserglas gewinnen; die aggregierten Füllstoffpartikel mit Siliciumdioxidoberfläche (Fig. 1B, Fig. 2B) werden bevorzugt mittels Gasphasensynthese erhalten. Letztere werden im folgenden Kompositpartikel genannt. Diese Kompositpartikel bestehen aus Aggregaten, die charakteristische Sinterhälse zeigen; im Inneren der Aggregate befinden sich verteilt mehrere Einschlüsse oder Domänen des induktiv anregbaren Materials, an der Oberfläche bestehen die Kompositpartikel überwiegend aus Siliciumdioxid.

Partikel mit Siliciumdioxid an der Oberfläche weisen gegenüber Feuchte eine hohe Dauerbeständigkeit der Bindung zwischen der Vernetzereinheit und der Füllstoffpartikeloberfläche auf und reagieren rasch mit den genannten chemischen Gruppen. Darüberhinaus schützt die Siliciumdioxidschicht die induktiv anregbaren Komponenten vor chemischem Angriff durch Bestandteile der Formulierung.

Die erfindungsgemäßen Vernetzerpartikel lassen sich beispielsweise als Vernetzer für Epoxidharze einsetzen. Dieses Epoxidharz kann beispielsweise ein mit einem Diamin gehärter Bisphenol A diglycidylether sein. Durch Verwendung derartiger Vernetzerpartikel erhält man ein Duromer das chemisch und thermisch hochbelastbar ist. In Figur 1A ist als Beispiel schematisch ein einzelnes Vernetzerpartikel mit Epoxidgruppen gezeigt. Die Füllstoffpartikel können auch, wie in Figur 2A gezeigt, in Form von Agglomeraten vorliegen. Figur 2A zeigt schematisch einen Ausschnitt aus einem Agglomerat von Eisenoxidpartikeln in einer Siliciumdioxidmatrix.

Die erfindungsgemäßen Klebstoffzusammensetzungen haben den Vorteil, dass die Verteilung der Füllstoffpartikel so ist, dass sie sich nur an den Stellen befinden, an denen ihre Wirkung erforderlich ist - in den Vernetzerpartikeln. Im Vergleich zu den vorbekannten Klebstoffzusammensetzungen finden sich die Füllstoffpartikel hier in unmittelbarem (d.h. molekularem oder nahezu molekularem) Kontakt zu den Stellen an denen sie ihre Wirkung entfalten sollen. Hierdurch wird bei induktiver Erwärmung ein unspezifisches Erwärmen des gesamten Polymers vermieden. Die erfindungsgemäßen Klebstoffzusammensetzungen können also unter milden Bedingungen induktiv ausgehärtet werden.

Weiterhin haben die erfindungsgemäßen Klebstoffzusammensetzungen den Vorteil, dass daraus hergestellte adhäsive Verbindungen ohne Zusatz von Substanzen, die eine Trennung erleichtern, auch wieder induktiv mit Zeit- und Energieeinsparung sauber getrennt werden können. Auch hier erfolgt auf molekularer Ebene die Erwärmung selektiv an der Stelle, an der die Bindungen zu brechen sind. Dies hat den Vorteil, dass nicht das gesamte Polymer zersetzt wird, wie dies beispielsweise beim Erwärmen mit einem Schweißbrenner oder Laser der Fall wäre. Eine unselektive thermische Zersetzung des Polymers kann daher vermieden werden.
Naturgemäß ist zum Vernetzen bzw. zum Aushärten eine geringere Induktionsleistung d.h. beispielsweise eine geringere Leistung des Hochfrequenzgenerators erforderlich als für das Trennen des adhäsiven Verbundes.

Erfindungsgemäß sind insbesondere Klebstoffzusammensetzungen geeignet, die einen Gehalt an Vernetzerpartikeln von 0,1 bis 80% bevorzugt 0,5 bis 40% und besonders bevorzugt 1% bis 30% aufweisen. Durch Erhöhen des Gehalts an Vernetzerpartikeln bzw. Vernetzereinheiten wird ein erhöhter Vernetzungsgrad und damit eine höhere Festigkeit erreicht.

Vorteilhafterweise haben die Vernetzerpartikel eine durchschnittliche Primärpartikelgröße d. h. einen durchschnittlichen Primärpartikeldurchmesser von weniger als 1000 nm, bevorzugt von weniger als 500 nm und besonders bevorzugt zwischen 2 nm und 100 nm. Hierdurch wird eine gleichmäßige Vernetzung der erfindungsgemäßen Klebstoffzusammensetzung erreicht. Weiterhin sind derartige kleine Partikelgrößen unter dem Aspekt der energetischen Wirtschaftlichkeit am geeignetsten.

Die erfindungsgemäßen Füllstoffpartikel können bei unzureichender Dispergiergüte agglomeriert vorliegen. Bevorzugt weisen die Vernetzerpartikel mindestens drei vernetzend wirkende funktionelle Gruppen auf. Hierdurch gelangt man zu einem Duromer. Ein Duromer wird generell dann erhalten, wenn drei chemische Gruppen (durch Polykondensation oder durch Polyaddition härtende Polymersysteme) oder gegebenenfalls auch schon zwei chemische Gruppen (durch Polymerisation härtende Polymersysteme) an den Vernetzer gebunden sind. Erfindungsgemäß sind Klebstoffzusammensetzungen mit Vernetzerpartikeln, die bezogen auf ihre Oberfläche mindestens 0,00001 mmol*m⁻² vernetzend wirkende funktionelle Gruppen aufweisen, bevorzugt. Typischerweise ist die Dichte der vernetzend wirkenden Gruppen im Bereich von 0,1 bis 1 mmol je 100 m² spezifischer Oberfläche des Vernetzerpartikels. Die erfindungsgemäßen Vernetzerpartikel bilden demzufolge nach der Härtungsreaktion ein sternförmiges Vernetzungszentrum im Polymernetzwerk.
Sind die funktionellen Gruppen an den Vernetzereinheiten beispielsweise Epoxidgruppen, so können diese mit BF₃-Etherat als Härtungskatalysator zur Vernetzung monofunktioneller Epoxidharze verwendet werden. Nach Aushärtung entsteht dann ein Duromer, ohne die erfindungsgemäßen Vernetzerpartikel würde nur ein lineares wenig belastbares Polymer entstehen.

Die erfindungsgemäßen Klebstoffzusammensetzungen enthalten bevorzugt Füllstoffpartikel die oberflächenmodifiziert sind und ausgewählt werden aus der Gruppe bestehend aus Eisen, Eisenlegierungen und eisenhaltigen Metalloxiden. Geeignet sind beispielsweise Füllstoffpartikel die auf Eisenpulver, Magnetitpulver, superparamagnetischem Eisenoxid oder Mangan-Zink-Eisenoxid basieren.
Beispielsweise kann nanoskaliges Magnetitpulver mit Siliciumdioxidschale durch Reaktion mit 3-Glycidoxypropyltrimethoxysilan mit Epoxidgruppen oberflächenmodifiziert bzw. funktionalisiert werden. Bei Verwendung eines Sol-Gel-Prozesses kann auch gleich eine Reaktion mit einem Epoxysilan erfolgen, so dass auf einen Reaktionsschritt verzichtet werden kann. Zur ein- oder zweistufigen Oberflächenmodifizierung kann aber auch ein anderes funktionelles Silan verwendet werden. Die funktionellen Gruppen des Silans werden dabei so ausgewählt, daß sie mit dem zu vernetzenden Polymersystem reagieren können. Geeignete Paarungen funktioneller Gruppen der Vernetzerkomponente und des Polymersystems sind beispielsweise die in der DE 197 33 643 A1, Seite 4 aufgeführten Paarungen. Beispielsweise wird ein auf Isocyanatpräpolymeren basierendes Duromer erhalten, wenn die erfindungsgemäßen Vernetzerpartikel mit Aminopropyltrimethoxysilan oberflächenmodifiziert werden. Durch Reaktion der Aminogruppen mit dem dimeren Isocyanat bilden sich als Vernetzungsstellen Harnstoffverknüpfungen. Bei Acrylatharzen erfolgt die Modifizierung der Vernetzerpartikel bevorzugt mit acrylat- oder methacrylatgruppenhaltigen Silanen, bei Mercaptanen mit Epoxysilanen.

Besonders bevorzugt sind Klebstoffzusammensetzungen mit Füllstoffpartikeln, die durch Flammpyrolyse hergestellt wurden.

Solche Füllstoffpartikel können Partikel oder aggregierte Partikel mit superparamagnetischen Eisenoxid-Domänen mit einem Durchmesser von 3 bis 20 nm in einer Siliciumdioxid-Matrix sein. Die Herstellung solcher Partikel ist beispielsweise von Zachariah et al. in Nanostructured Materials 5, 383 (1995) oder Ehrman et al. in Journal of Materials Research 14, 4551 (1999) beschrieben.

Besonders geeignet sind die in DE 10140089.6 mit Anmeldetag vom 16.08.2001 beschriebenen Eisenoxid-Siliciumdioxid-Kompositpartikel.

Unter den Domänen der Füllstoffpartikel sind räumlich voneinander getrennte superparamagnetische Bereiche zu verstehen. Bedingt durch den flammpyrolytischen Prozess sind diese Partikel weitestgehend porenfrei und weisen auf der Oberfläche freie Hydroxylgruppen auf. Sie weisen superparamagnetische Eigenschaften bei Anlegen eines äußeren Magnetfeldes auf. Der Anteil der superparamagnetischen Eisenoxid-Domänen der Füllstoffpartikel kann zwischen 1 und 99,6 Gew.-% liegen. In diesem Bereich liegen durch die nicht magnetische Matrix räumlich getrennte Bereiche von superparamagnetischen Eisenoxid-Domänen vor. Bevorzugt ist der Bereich mit einem Anteil an superparamagnetischen Domänen größer 30 Gew.-%, besonders bevorzugt größer 50 Gew.-%. Mit dem Anteil der superparamagnetischen Bereiche nimmt auch die erzielbare magnetische Wirkung der erfindungsgemäßen Partikel zu.

In diesen Domänen kann das Eisenoxid in einer einheitlichen Modifikation oder in verschiedenen Modifikationen vorliegen.

Daneben können auch Bereiche nicht magnetischer Modifikationen in den Partikeln vorliegen. Dies können Mischoxide des Siliciumdioxides und Eisenoxid sein. Als Beispiel hierfür soll Eisensilikalit (FeSiO₄) dienen. Diese nichtmagnetischen Bestandteile verhalten sich bezüglich des Superparamagnetismus wie die nichtmagnetische Siliciumdioxid-Matrix. Das heißt: Die Domänen bleiben superparamagnetisch, wobei mit steigendem Anteil der nichtmagnetischen Bestandteile jedoch die Sättigungsmagnetisierung sinkt.

Zusätzlich können auch Eisenoxid-Domänen vorliegen, die aufgrund ihrer Größe keinen Superparamagnetismus zeigen und eine Remanenz induzieren. Dies führt zur Erhöhung der volumenspezifischen Sättigungsmagnetisierung. Je nach Anwendungsgebiet lassen sich so angepaßte Kompositpartikel herstellen.

Eine besonders bevorzugte superparamagnetische Eisenoxid-Domäne ist gamma-Fe₂O₃ (γ-Fe₂O₃), Fe₃O₄, und Mischungen hiervon.

Neben der räumlichen Trennung der superparamagnetischen Eisenoxid-Domänen kommt der Siliciumdioxid-Matrix auch die Aufgabe zu, die Oxidationsstufe der Domäne zu stabilisieren. So wird zum Beispiel Magnetit als superparamagnetische Eisenoxidphase durch eine Siliciumdioxidmatrix stabilisiert.

Gemäß einer besonderen Ausführungsform kann der Kohlenstoffgehalt der Füllstoffpartikel kleiner als 500 ppm sein. Besonders bevorzugt ist der Bereich kleiner als 100 ppm.

Diese können ferner einen Chloridgehalt von 50 bis 1000 ppm aufweisen, der von der Herstellung der Partikel herrührt. Die Partikel werden durch einen flammpyrolytischen Prozess erhalten, bei dem chlorhaltige Vorläufer zum Beispiel in einer Wasserstoff/Sauerstoff-Flamme zur Reaktion gebracht werden. Die sich bildenden Partikel können Chlor zum Beispiel in Form von Oxychloriden aus der nicht vollständigen verlaufenen Reaktion, sowie in Form von Salzsäure aufweisen. Werden diese Verbindungen in dem sich bildenden Partikel eingeschlossen, kann der Chloridgehalt der Partikel auch durch Reinigungsschritte nicht weiter reduziert werden, ohne die Partikel zu zerstören. Durch Reinigungsschritte kann der Chloridgehalt bis auf Werte von ca. 50 ppm reduziert werden.

Die Füllstoffpartikel können in Abhängigkeit von der Führung des flammpyrolytischen Prozesses unterschiedliche Aggregationsgrade aufweisen. Einflußparameter können Verweilzeit, Temperatur, Druck, die Partialdrücke der eingesetzten Verbindungen, die Art und der Ort des Abkühlens nach der Reaktion sein. So kann ein breites Spektrum von weitestgehend sphärischen bis weitestgehend aggregierten Kompositpartikel erhalten werden.

Die BET-Oberfläche, bestimmt nach DIN 66131, der Füllstoffpartikel kann über einen weiten Bereich von 10 bis 600 m²/g variiert werden. Besonders vorteilhaft ist der Bereich zwischen 50 und 300 m²/g.

In einer bevorzugten Ausführungsform der Kompositpartikel kann die "blocking temperature", die Temperatur unterhalb der kein superparamagnetisches Verhalten mehr festzustellen ist, nicht mehr als 150 K betragen. Diese Temperatur kann neben der Zusammensetzung des Partikels, auch von der Größe der superparamagnetischen Domänen und deren Anisotropie abhängen.

Die Kompositpartikel aus superparamagnetischem Eisenoxid und Siliciumdioxid als Füllstoffpartikel werden anschließend an der Oberfläche z.B. mit Silanen zur Reaktion gebracht, welche zusätzlich Gruppen tragen, die mit dem Klebstoff reagieren können. Auf diese Weise werden die induktiv anregbaren Vernetzerpartikel erhalten.

Bei einer vorteilhaften Weiterbildung der Erfindung sind die Füllstoffpartikel über eine thermisch labile Gruppe an die Vernetzereinheiten gebunden. Als thermisch labile Gruppe kommen insbesondere Azogruppen, Carbonatgruppen oder Ethylengruppen mit sterisch anspruchsvollen Substituenten in Betracht. Bei der Erwärmung von Klebstoffzusammensetzungen mit derartigen thermisch labilen Gruppen erfolgt bei einer bestimmten Temperatur ein Bindungsbruch, wobei für die oben angegebenen Beispiele etwa Stickstoff oder Kohlendioxid entsteht bzw. die Kohlenstoff-Kohlenstoffbindung der Ethylengruppe mit sterisch anspruchsvollen Substituenten gebrochen wird. Ein Füllstoffpartikel, an das die Vernetzereinheiten über eine thermisch labile Gruppe gebunden ist, zeigt beispielsweise Figur 1B oder Figur 2B, bei der die Füllstoffpartikel in agglomerierter Form vorliegen.

In einer Variante enthält die Klebstoffzusammensetzung, die mittels eines elektrischen Feldes, magnetischen Feldes, elektromagnetischen Feldes, elektrischen Wechselfeldes, magnetischen Wechselfeldes oder elektromagnetischen Wechselfeldes erwärmbar ist, ein Polymer, ein Polymergemisch oder ein Reaktivharz, eine thermisch labile Substanz, eine Vernetzerkomponente, sowie Füllstoffpartikel, die metallisch, ferromagnetisch, ferrimagnetisch, superparamagnetisch oder paramagnetisch sind.

Derartige Klebstoffzusammensetzungen sind insbesondere zur Herstellung gehärteter adhäsiver Verbindungen geeignet, die durch induktive Erwärmung wieder gelöst werden sollen.

Klebstoffzusammensetzungen sind auch im Sinne dieser Variante insbesondere Klebstoffe, Lacke, Primer, Vergussmassen, Dichtstoffe und Laminierharze.
Als Polymere, Polymergemische und Reaktivharze können auch im Sinne dieser Variante alle für die eingangs genannten Anwendungen geeigneten Polymere und Polymergemische angesehen werden. Bevorzugt sind auch für diese Variante vernetzte Polymere, besonders bevorzugt Polymere oder Reaktivharze, aus denen strukturelle oder semistrukturelle Verbindungen hergestellt werden können. Insbesondere sind Epoxidharze, Polyurethane, Acrylate, Phenolharze, Polysulfide oder Melaminharze geeignet.

Die induktiv anregbaren Füllstoffe liegen entweder in Form singulärer Nanopartikel bzw. Aggregate oder in Form von Agglomeraten vor. Sie befinden sich bevorzugt in unmittelbarem Kontakt zu der thermisch labilen Substanz, so dass die Erwärmung selektiv an dem Ort erfolgt an dem Bindungen gebrochen werden sollen. Besonders bevorzugt ist daher die thermisch labile Substanz an die induktiv anregbaren Füllstoffe gebunden. Weiterhin sind Füllstoffpartikel, die eine siliciumdioxidhaltige Beschichtung tragen, bevorzugt. Sie weisen eine hohe Dauerbeständigkeit gegenüber Feuchte auf.

Der Vernetzer trägt funktionelle Gruppen, die bei Erwärmung, die entweder induktiv oder auch nach herkömmlicher Art thermisch erfolgen kann, Vernetzungsreaktionen mit dem Polymer, dem Polymergemisch oder dem Reaktivharz eingehen. Als Gruppen, die Vernetzungsreaktionen eingehen,sind beispielsweise Epoxid-, Amino-, Thiol-, Alkohol-, Acrylat-, Methacrylat- oder Vinylgruppen geeignet.

Die Klebstoffzusammensetzungen dieser Variante haben daher den Vorteil, dass nach ihrer Aushärtung adhäsive Verbindungen entstehen, die durch induktive Erwärmung mit Zeit- und Energieeinsparung sauber getrennt werden können. Befinden sich die Füllstoffpartikel in unmittelbarem Kontakt zu der thermisch labilen Substanz, so erfolgt die. Erwärmung hierbei selektiv an der Stelle, an der Bindungen der thermisch labilen Substanz zu brechen sind. Dies hat den Vorteil, dass nicht das gesamte Polymer zersetzt wird, wie dies beispielsweise beim Erwärmen mit einem Schweißbrenner oder Laser der Fall wäre. Eine unselektive thermische Zersetzung des Polymers kann daher vermieden werden.

Als der Klebstoffzusammensetzung zugefügte thermisch labile Substanzen sind insbesondere Substanzen geeignet, die durchschnittliche Partikelgrößen zwischen 2 nm und 100 µm, bevorzugt 2 nm und 1 µm und besonders bevorzugt 2 nm und 200 nm aufweisen.
Derartige Partikel können vereinzelt oder in Form von Agglomeraten vorliegen. Werden adhäsive Verbindungen, die durch Härtung von derartigen Klebstoffzusammensetzungen erhältlich sind, erwärmt, so kommt es zum Bruch von Bindungen in diesen thermisch labilen Substanzen oder zu Phasenumwandlungen dieser thermisch labilen Substanzen und das Polymernetzwerk wird destabilisiert, wodurch ein Brechen der adhäsiven Verbindung möglich ist.

In einer vorteilhaften Weiterbildung ist die thermisch labile Substanz ein Treibmittel, das unter Wärmeeinwirkung ein Gas bildet, wobei die Gasbildungstemperatur höher ist als die Temperatur, bei der die Vernetzung der Klebstoffzusammensetzung einsetzt.

Das Lösen von Adhäsivverbunden, die aus derartigen Klebstoffzusammensetzungen hergestellt wurden, erfolgt durch induktives Erwärmen der an das Treibmittel gekoppelten Partikel über die Zersetzungstemperatur des Treibmittels bzw. der Treibmittelkomponente und die dadurch verursachte thermische Zersetzung. Die entstehenden gasförmigen Zersetzungsprodukte "sprengen" den Adhäsivverbund auseinander. Geeignete Treibmittel sind beispielsweise kristallwasserabspaltende Substanzen (z.B. Aluminumnitrat), organische Carbonsäuren (z.B. Oxalsäure, Glutarsäure), Azoverbindungen (z.B. Azodicarbonamid, Azoisobutyronitril) oder Fluorkohlenwasserstoffe.

Besonders bevorzugte Treibmittel sind Azodicarbonamid und Sulfohydrazide wie insbesondere Toluolsulfohydrazid und Oxy-bis (benzosulfohydrazid). Generell sind auch Derivate des Azodicarbonamids geeignet. Die Treibmittel können gegebenenfalls mit Zinksalzen aktiviert sein. Diese Treibmittel haben den Vorteil, dass sie eine hohe Gasausbeute liefern, in organischen Medien sehr schlecht löslich sind, sich bei 180 bis 200°C, d. h. oberhalb der Gebrauchstemperatur üblicher Klebverbindungen, zersetzen und nicht toxisch sind. Bei Bedarf kann die Zersetzungstemperatur durch zusätzliche Aktivatoren erniedrigt werden und so auf die Bedingungen eingestellt werden, bei denen ein Lösen der adhäsiven Verbindungen vorgesehen ist. Die schlechte Löslichkeit der genannten Treibmittel in organischen Medien hat zur Folge, dass das Treibmittel nicht im Klebstoff gelöst wird und dadurch der innige Kontakt zwischen den induktiv erwärmbaren Füllstoffpartikeln und dem Treibmittel im Klebstoff erhalten bleibt. Dadurch wird die Effektivität der erfindungsgemäßen Harzformulierung weiter gesteigert.

In einer weiteren vorteilhaften Ausgestaltung der erfindungsgemäßen Klebstoffzusammensetzung werden aus Treibmittel und Füllstoffpartikeln zunächst Kollektivpartikel gebildet, wobei das Treibmittel gegebenenfalls an die Füllstoffpartikel gebunden sein kann. Unter Kollektivpartikeln sind also Partikel zu verstehen, die sowohl das Treibmittel als auch die Füllstoffpartikel enthalten.
Diese Kollektivpartikel werden durch Fällen, Pressen, Mikroverkapseln oder Binden von Treibmitteln und Füllstoffpartikeln mit einem Polymer erhalten. Die Größe derartiger Kollektivpartikel ist lediglich durch die spätere Anwendung begrenzt. Derartige Kollektivpartikel haben den Vorteil, dass man mit der Klebstoffmatrix gut verträgliche induktiv erwärmbare Treibmittelpartikel herstellen kann. Das Treibmittel kann daher vom Harzsystem nicht gelöst werden und der innige Kontakt zwischen induktiv erwärmbaren Füllstoffpartikeln und dem Treibmittel bleibt erhalten.

Vorzugsweise ist das Polymer zur Bildung der Kollektivpartikel aufschäumbares Polystyrol. Die Kollektivpartikel sind also Polystyrolperlen, die gleichzeitig die induktiv erwärmbaren Füllstoffpartikel und ein Treibmittel, das üblicherweise zum Aufschäumen von Polystyrol verwendet wird, enthalten. Derartige Polystyrolperlen haben vorteilhafterweise eine Größe von 1 µm bis 1 mm. Bei der induktiven Erwärmung von Adhäsivverbunden, die aus Klebstoffzusammensetzungen, die diese Polystyrolperlen enthalten, hergestellt wurden, kommt es zum Aufschäumen der Polystyrolpartikel und damit zum Lösen des Adhäsivverbundes.

Die erfindungsgemäße Klebstoffzusammensetzung wird vorteilhafterweise für Klebstoffe, Lacke, Dichtstoffe, Primer, Matrixharze oder Vergussharze verwendet.

Ein Verfahren zum Aushärten der erfindungsgemäßen Klebstoffzusammensetzung zu adhäsiven Verbindungen besteht darin, dass die Klebstoffzusammensetzung mittels eines elektrischen Feldes, magnetischen Feldes, elektromagnetischen Feldes, elektrischen Wechselfeldes, magnetischen Wechselfeldes oder elektromagnetischen Wechselfeldes induktiv auf eine Temperatur erwärmt wird, bei der die Vernetzung der Klebstoffzusammensetzung einsetzt.
Dieses Verfahren hat den Vorteil, dass die Dauer der induktiven Erwärmung üblicherweise im Sekunden- bis Minutenbereich liegt und ist somit wesentlich kürzer als bei den herkömmlichen thermischen Härtungsverfahren. Damit ist es insbesondere für die Härtung der erfindungsgemäßen Klebstoffzusammensetzungen an empfindlichen Objekten geeignet. Außerdem ist dieses Verfahren energetisch sehr effizient.

Das erfindungsgemäße Härtungsverfahren kann insbesondere so durchgeführt werden, wie in Ortwin Hahn, Andrea Kaimann, Adhäsion - kleben und dichten, 10/2001, S.35 bis 38 für Klebstoffzusammensetzungen, die grobteilige Füllstoffe enthaltend, beschrieben ist. Der Zusatz von Härtungskatalysatoren und Aktivatoren, wie sie die noch unveröffentlichte DE 10127704.0 beschreibt, ist vorteilhaft.

Der mit dem erfindungsgemäßen Verfahren zum Aushärten der erfindungsgemäßen Klebstoffzusammensetzung erhaltene Adhäsivverbund weist mindestens eine ausgehärtete Klebstoffschicht auf. Insbesondere kann ein derartiger Adhäsivverbund eine Klebverbindung, ein Vergussbauteil, ein Abdichtungsbauteil oder ein Polymerlaminat sein. Die ausgehärtete Klebstoffschicht kann eine Lackschicht oder eine Primerschicht sein.

Das erfindungsgemäße Verfahren zum thermischen Lösen des Adhäsivverbundes, der durch Härtung der erfindungsgemäßen Klebstoffzusammensetzung erhältlich ist, wird derart durchgeführt, dass die ausgehärtete Schicht der Klebstoffzusammensetzung mittels eines elektrischen Feldes, magnetischen Feldes, elektromagnetischen Feldes, elektrischen Wechselfeldes, magnetischen Wechselfeldes oder elektromagnetischen Wechselfeldes induktiv erwärmt wird. Enthält die Klebstoffzusammensetzung die erfindungsgemäßen Vernetzerpartikel, so wird die ausgehärtete Schicht der Klebstoffzusammensetzung in dem erfindungsgemäßen Verfahren auf eine Temperatur erwärmt, die über der Ceiling-Temperatur der Vernetzungspunkte liegt. Enthält die Klebstoffzusammensetzung Füllstoffpartikel und eine thermisch labile Substanz, so wird die ausgehärtete Schicht der Klebstoffzusammensetzung induktiv auf eine Temperatur erwärmt, bei der die thermisch labilen Bindungen der thermisch labilen Substanz bzw. der thermisch labilen Gruppe brechen.

Beim erfindungsgemäßen Verfahren zum thermischen Lösen der gehärteten Adhäsivverbunde werden also die Füllstoffpartikel induktiv erwärmt, wodurch eine chemische Reaktion ausgelöst wird, bei der entweder die thermisch labilen Substanzen durch Bindungsbruch, Gasbildung, und/oder Quelleffekte ein Brechen der Vernetzungspunkte des Polymernetzwerks bewirken oder bei der durch die induktive Erwärmung der Füllstoffpartikel ein Bindungsbruch an den in unmittelbarer Nachbarschaft der Füllstoffpartikel vorliegenden Vernetzungspunkten eintritt.

Das Lösen der erfindungsgemäßen Adhäsivverbunde erfolgt dabei selektiv durch Einwirken der Hochfrequenzenergie einer konventionellen Induktionsspule. Durch gebildete Wirbelströme, Partikelbewegungen im Wechselfeld und Hysterese-Verluste erwärmen sich die erfindungsgemäß im Polymernetzwerk befindlichen metallischen, ferromagnetischen, ferrimagnetischen, superparamagnetischen oder paramagnetischen Füllstoffpartikel. Hierbei kommt es in unmittelbarer Umgebung der Füllstoffpartikel auch zu einer Erwärmung des Polymersystems. Die Induktionsspannung wird so gewählt, dass die entstehende Wärme ausreicht, die Vernetzungspunkte in dem Polymernetzwerk zu lösen bzw. im Falle der Kombination mit Treibmitteln, dieses thermisch zu zersetzen. Die Induktionsfrequenzen liegen bevorzugt zwischen einigen Kilohertz und etwa 35 Megahertz. Die jeweils benötigten Geräte, Parameter und Geräteeinstellungen hängen dabei vom verwendeten Füllstoff und dessen Gehalt im Polymersystem ab. Insbesondere die Partikelgrößenverteilung, die Curie-Temperatur, die Permeabilität, der elektrische Widerstand, der Wärmeausdehnungskoeffizient und die spezifische Wärmekapazität sind Größen, von denen die erreichbare Temperatur bei einer bestimmten Geräteeinstellung abhängt. Die zum Trennen erforderliche Temperatur hängt von der Wärmestabilität des jeweiligen Polymersystems bzw. Treibmittels ab. Sind die verwendeten Füllstoffpartikel an die Vernetzungsstellen des Polymersystems chemisch gebunden, so ist der Füllstoff selber Bestandteil des Polymersystems. Auf Grund der lokalen Nähe der zu trennenden chemischen Bindungen zu den erfindungsgemäß eingebrachten durch Induktion erwärmbaren Füllstoffpartikel erfolgt die Trennung in diesem Fall besonders effektiv.

Das erfindungsgemäße Verfahren zum Lösen von Adhäsivverbunden kann auf Klebverbindungen angewandt werden, die nur aus dem erfindungsgemäßen Klebstoff selbst bestehen, es kann aber auch ein Klebprimer auf der Basis der erfindungsgemäßen Klebstoffzusammensetzungen in Kombination mit einem handelsüblichen Klebstoff verwendet werden. In diesem Fall erfolgt das Lösen des Verbundes selektiv in der Primerschicht. Der Klebstoff verbleibt auf einem der beiden verklebten Teile.

Ist die erfindungsgemäße Klebstoffzusammensetzung ein Lack, der induktiv abgebeizt werden soll, so sind insbesondere erfindungsgemäße Klebstoffzusammensetzungen vorteilhaft, bei denen die Füllstoffpartikel an die Vernetzerkomponente gebunden sind. Dies hat den Vorteil, dass beim Abbeizen keine Chemikalien, keine teuren Geräte und kein hoher Personalaufwand nötig wird. Weiterhin sind die induktiv abbeizbaren Lacke für empfindliche Substrate besonders geeignet. Als Beispiele seien hierfür faserverstärkte Kompositkunststoffe genannt, bei welchen die Basispolymere durch die Abbeizchemikalien geschädigt werden, oder beim Schleifen die Fasern freigelegt oder beschädigt werden können. Beides führt zu einer unzulässigen Schwächung des empfindlichen Bauteils.
Das erfindungsgemäße Verfahren zum induktiven Abbeizen kommt insbesondere für kohlefaserverstärkte Bauteile von Flugzeugen oder glasfaserverstärke Komposite in Schiffsrümpfen und Windkraftflügeln in Frage.

### Anwendungsbeispiele:

Die erfindungsgemäße Klebstoffzusammensetzung, das Verfahren zu ihrer Härtung zu einem Adhäsivverbund und das Lösen dieses Adhäsivverbundes wird nachfolgend an Hand von Anwendungsbeispielen näher erläutert.

### Beispiel 1 - Härten und Lösen einer Klebverbindung mit induktiv anregbaren an einen Vernetzer gebundenen Füllstoffpartikeln

### 1a) Mit Siliciumdioxid umhülltes nanoskaliges Magnetit

43,3 g Eisen(III)-chlorid Hexahydrat werden in 370 ml Wasser gelöst und durch Einleiten von Stickstoff vom gelösten Sauerstoff befreit. Es werden 15,9 g Eisen(II)-chlorid tetrahydrat zugegeben und unter Rühren mit einem KPG-Rührer bei strömendem Stickstoffstrom innerhalb von zwei Stunden eine Lösung von 25,6 g Natriumhydroxid in 100 ml Wasser zugetropft. Es bildet sich hierbei ein feinteiliger schwarzer Niederschlag aus Fe₃O₄. Anschließend wird eine Lösung von 22 g Na₂Si₃O₇ (Glühverlust 17 Gew.-%) in 80 ml heißem Wasser innerhalb von 30 min zugetropft. Unter weiterem Rühren wird nun die Kieselsäure durch langsames Zutropfen von Salzsäure (14 ml 37 %ige Salzsäure auf 50 ml mit Wasser aufgefüllt) ausgefällt. Der Niederschlag wird filtriert und fünfmal mit destilliertem Wasser aufgeschlämmt und jeweils wieder filtriert um das gebildete Natriumchlorid abzutrennen. Das resultierende Material besteht aus agglomerierten Nanopartikeln. Die Primärpartikel haben einen Durchmesser von etwa 8 nm (ermittelt durch Transmissionselektronenmikroskopie) und die Agglomerate von etwa 400 nm (ermittelt durch Lichtstreuung).

### 1b) Modifikation der nanoskaligen induktiv anregbaren Füllstoffpartikel

20 g des nach Beispiel 1a hergestellten nanoskaligen Magnetits mit einer Restfeuchte von 40% oder ein vergleichbares Material aus anderer Quelle wird mit Aceton aufgeschlämmt, auf ein Gesamtvolumen von 300 ml aufgefüllt, mit 0,3 ml konzentrierter Salzsäure angesäuert und mit 15 g Epoxycyclohexyltrimethoxysilan versetzt. Es wird 24 Stunden mit einem KPG Rührer gerührt und anschließend am Rotationsverdampfer im Vakuum getrocknet. Der so oberflächenmodifizierte Füllstoff trägt cycloaliphatische Epoxidgruppen an der Oberfläche und ist in der Lage als Vernetzer im Klebstoffsystem zu wirken.

### 1c) Einarbeiten des oberflächenmodifizierten Füllstoffes in einen Klebstoff

10 g 3,4-Epoxycyclohexylmethyl-3',4'-epoxycyclohexancarboxylat, 10 g Cyclohexenoxid, 0,2 g (Tolylcumyl) iodoniumtetrakis(pentafluorphenyl)borat und 0,2 g Ascorbinsäure-6-hexadecanat werden so lange gerührt bis eine homogene Mischung entstanden ist (Basismischung gemäß der unveröffentlichten DE10127704.0). Mit einem Dissolver werden 4 g des nach b) oberflächenmodifizierte Füllstoffes eingearbeitet. Nach 15 min Rührzeit ist eine homogene thixotrope Masse entstanden, welche im Folgenden als Klebstoff eingesetzt wird.

### 1d) Kleben mit induktiver Härtung und wieder Lösen der Klebverbindung

25 mm breite und 4 mm dicke Fügeteile aus glasfaserverstärktem Polyester werden mit dem nach c) hergestellten Klebstoff verklebt. Hierzu wird ein Fügeteil im Fügebereich mit einer 0,2 mm dicken Klebstoffschicht bestrichen, das zweite Fügeteil aufgesetzt und beide Teile mit einem leichten Druck fixiert (ca. 0,02 N/mm²). Das anschließende Härten des Klebstoffes erfolgt durch Anregen mit einem Halbleitergenerator M230 der Firma STS statt. Die Anregungsfrequenz dieses Generators ist 300 kHz. Zur induktiven Anregung des Klebstoffes in der Klebverbindung wird eine Spule mit drei Windungen und einem Innendurchmesser von 3 cm verwendet. Die Klebfläche wird in der Mitte der Spule senkrecht zur Spulenachse orientiert. Bei einer Leistung von 1000 W und einer Einwirkzeit von 5 min ist der Klebstoff gehärtet und man erhält eine feste Verbindung. Diese wird anschließend durch Erhöhen der Generatorleistung auf 3000 W innerhalb von 60 s gelöst. Bei einem Vergleichsbeispiel ohne induktiv anregbare nanoskalige Füllstoffpartikel ist es selbst bei einer Leistung von 3000 W und einer Einwirkzeit von 10 min nicht möglich den Klebstoff zu härten.

### Beispiel 2 - Durch ein induktiv anregbares Treibmittel lösbare Klebverbindung

### 2a) Formulierung aus Magnetitpulver und Treibmittel

20 g des nach 1a) hergestellten Materials (Restfeuchtegehalt des Filterkuchens 40%) oder ein aus anderer Quelle stammendes nanoskaliges Magnetitpulver wird in 100 ml Ethanol suspendiert und 20 g Oxy-bis(benzosulfohydrazid) als Treibmittel zugegeben. Die Mischung wird unter Rühren für 4 Stunden auf 70°C erwärmt und anschließend das Lösemittel am Rotationsdampfer abgezogen. Die trockene Formulierung wird in der Kugelmühle für 5 Minuten gemahlen und anschließend gesiebt. Die Fraktion mit einer Korngröße von nominell kleiner 63 µm wird für die weiteren Versuche verwendet.

### 2b) Einarbeiten des Formulierung aus Beispiel 2a) in einen Klebstoff

8 g 3,4-Epoxycyclohexylmethyl-3',4'-epoxycyclohexancarboxylat, 2 g Poly(tetrahydrofuran) mit einem Mₙ=250, 0,1 g (Tolylcumyl)iodoniumtetrakis(pentafluor phenyl)borat und 0,04 g Ascorbinsäure-6-hexadecanat werden gerührt bis sich die Komponenten ineinander gelöst haben (Basismischung gemäß der unveröffentlichten DE 101277D4.0). Anschließend werden 2 g der Formulierung eingerührt, wodurch das Material eine teigige Konsistenz bekommt. Ein Teil der Probe härtet bei 90°C innerhalb von 30 min zu einem klebfreien Polymer aus.

### 2c) Kleben und wieder Lösen einer Kunststoffverbindung

Fügeteile aus Polypropylen mit einer Breite von 25 mm und einer Dicke von 3 mm werden gemäß dem Stand der Technik durch Fluorieren vorbehandelt, mit einer ca. 0,2 mm dicken Schicht der mit der induktiv anregbaren Formulierung bestrichen, ein zweites Fügeteil aufgesetzt und unter leichtem Druck (ca. 0,02 N/mm²) für 30 min in einem 90°C warmen Ofen ausgehärtet. Das anschließende Trennen des Verbundes erfolgt durch Anregen mit einem Halbleitergenerator M230 der Firma STS statt. Die Anregungsfrequenz dieses Generators ist 300 kHz. Zur induktiven Anregung des Klebstoffes in der Klebverbindung wird eine Spule mit drei Windungen und einem Innendurchmesser von 3 cm verwendet. Die Klebfläche wird in der Mitte der Spule senkrecht zur Spulenachse orientiert. Bei einer Leistung von 1500 W und einer Einwirkzeit von 25 s hat sich das Treibmittel zersetzt und dadurch die Klebverbindung gelöst. Bei einem Vergleichsbeispiel ohne das nanoskalige Magnetitpulver lässt sich die Klebverbindung selbst nach der Einwirkung einer Leistung von 3000 W für 2 min nicht lösen.

Die analytischen Daten der in den Beispielen 3 bis 6 eingesetzten Eisenoxid-Siliciumdioxid-Kompositpartikel sind in Tabelle 1 wiedergegeben. Die Herstellung dieser Partikel ist in DE 10140089.6 beschrieben.

**Tabelle 1: Analytische Daten der Eisenoxid-Siliciumdioxid-Kompositpartikel der Beispiele 3, 4, 5 und 6**

| **Verwendung in Beispiel** | | **3, 4, 5** | **6** |
|---|---|---|---|
| Eisenoxid(*) | Gew.-% | 50 | 50 |
| Kohlenstoffgehalt | ppm | 70 | < 10 |
| Chloridgehalt | ppm | 368 | 635 |
| Sättigungsmagnetisierung | Am²/kg | 17 | 12,5 |
| gamma-Fe₂O₃-Kristallitgröße | nm | 10,8 | 15,1 |
| Blocking-Temperatur (ca.) | K | 100 | n.b. |
| BET-Oberfläche | m²/g | 146 | 88 |

| | | | |
|---|---|---|---|
| * berechnet als Fe₂O₃; n.b. = nicht bestimmt | | | |

### Beispiel 3: Lösen einer Glasklebung basierend auf einem Klebstoff mit induktiv anregbarem Treibmittel

### 3a) Formulierung aus flammpyrolytisch hergestelltem Kompositpartikel und einem Bindemittel

25 g von flammpyrolytisch hergestellten nanoskaligen Kompositpartikeln aus Siliciumdioxid und Eisenoxid mit den in Tabelle 1 angegebenen Eigenschaften wird in 100 ml Ethanol suspendiert und 20 g Oxy-bis(benzosulfohydrazid) als Treibmittel zugegeben. Die Mischung wird unter Rühren für 5 Stunden auf 60°C erwärmt und anschließend das Lösemittel am Rotationsdampfer abgezogen. Die trockene Formulierung wird in der Kugelmühle für 3 Minuten gemahlen und anschließend gesiebt. Die Fraktion mit einer Korngröße von nominell kleiner 63 µm wird für die weiteren Versuche verwendet.

### 3b) Einarbeiten des Formulierung aus Beispiel 3a) in einen Klebstoff und Klebversuche

300 g des feuchtigkeitshärtenden einkomponentigen Polyurethanklebstoffes Dinitrol PUR 501 FC (Dinol GmbH) werden in dem mit Knethaken versehenen Mischer Planimax (Molteni) mit 10 g des nach Beispiel 3a hergestellten Formulierung aus Treibmittel und induktiv anregbarem Nanofüllstoff modifiziert. Es wird 15 Minuten in trockener Atmosphäre auf Stufe 1 (150 Upm) geknetet.

Mit dem so modifizierten Klebstoff wird eine Dickschichtklebung aus einem sandgestrahlten und entfetteten Aluminiumblech und einer 3mm dicken Floatglasscheibe angefertigt. Die Überlappungslänge ist 25 mm und die Klebschichtdicke 3 mm. Nach einer Härtungszeit von 1 Woche bei 25°C und 50 % relativer Luftfeuchte wird die Verbindung durch induktive Anregung wieder getrennt. Das Trennen der Verbindung erfolgt durch Anregen mit einem Halbleitergenerator M230 der Firma STS. Die Anregungsfrequenz dieses Generators ist 300 kHz. Zur induktiven Anregung des Klebstoffes in der Klebverbindung wird eine Spule mit drei Windungen und einem Innendurchmesser von 3 cm verwendet. Die Klebfläche wird in der Mitte der Spule senkrecht zur Spulenachse orientiert. Bei einer Leistung von 3000 W und einer Einwirkzeit von 2 min ist der Klebstoff durch das Aufschäumen des Treibmittels zerstört. Die beiden Fügeteile können einfach auseinander genommen werden.

### Beispiel 4: Lösbare Klebverbindung basierend auf einem induktiv lösbaren Klebprimer

In 200 g des Klebprimers Sika-Primer 206G+P (Sika AG) werden 5 g des nach Beispiel 3a hergestellten Formulierung aus Treibmittel und induktiv anregbarem Nanofüllstoff eingerührt. Der Primer wird deckend auf ein sandgestrahltes und entfettetes Aluminiumblech aufgetragen. Nach einer Ablüftzeit von einer Stunde wird das so vorbehandelte Blech mit einem 3 mm dicken Buchensperrholz verklebt. Als Klebstoff wird Sikaflex 254 (Sika AG) mit einer Dicke von 3 mm aufgetragen, die Überlappungslänge ist 25 mm. Der Klebstoff härtet innerhalb einer Woche bei einer relativen Luftfeuchte von 50 % und 25°C. Die Verbindung wird anschließend durch induktive Anregung wieder getrennt. Die Anregen des zur Trennung erfolgt mit dem Halbleitergenerator M230 der Firma STS. Die Anregungsfrequenz dieses Generators ist 300 kHz. Zur induktiven Anregung des Klebstoffes in der Klebverbindung wird eine Spule mit drei Windungen und einem Innendurchmesser von 3 cm verwendet. Die Klebfläche wird in der Mitte der Spule senkrecht zur Spulenachse orientiert.

Bei einer Leistung von 3000 W und einer Einwirkzeit von 2 min ist der an der Aluminiumseite aufgetragene Klebprimer durch das Aufschäumen des Treibmittels zerstört. Die Verbindung kann leicht auseinander genommen werden, wobei der Klebstoff selektiv auf dem Sperrholz verbleibt.

### Beispiel 5: Härten eines elastischen Klebstoffes und Prüfung der Klebeigenschaften

Der elastische Klebstoff Elastosol M83 (Tivoli, Hamburg) ist ein einkomponentiger, heißhärtender Metallklebstoff auf der Basis von Polybutadien. Anhand des Vergleichs der Härtung in einem konventionellen Ofen mit der erfindungsgemäßen induktiven Härtung, soll gezeigt werden, dass äquivalente Klebergebnisse bei beiden Härtungsarten erzielt werden. Hierbei soll die induktive Härtung schneller ablaufen.

Zu 250 g des Klebstoffes Elastosol M83 werden 25 g der Eisenoxid-Siliciumdioxid-Kompositpartikel nach Tabelle 1 mit einem mit Knethaken bestückten Mischer Planimax (Molteni) eingearbeitet. Zunächst wird 5 min mit 150 Umdrehungen pro Minute geknetet und anschließend weitere 30 min mit 450 Upm (Stufe 3). Zum Entgasen wird dann weitere 5 min bei angelegtem Vakuum weiter geknetet (Stufe 3). Das so erhaltene erfindungsgemäße Material wird für die Klebversuche verwendet.

Zur Prüfung der Klebeigenschaften werden Zug-Scher-Proben in Anlehnung an DIN EN 1465 mit einem Fügeteil aus Aluminiumwalzblech AlMg_{0,4}Si₁₂ mit einer Dicke von 1,15mm und einem Fügeteil aus 4mm dickem glasfaserverstärktem Polypropylen hergestellt. Das Aluminium wird geschliffen und mit Butanon entfettet. Das Polypropylen wird im Niederdruckplasma mit Luft als Arbeitsgas vorbehandelt.

Zunächst werden Klebproben mit dem erfindungsgemäß modifizierten Klebstoff hergestellt und induktiv gehärtet. Das Härten des Klebstoffes erfolgt durch Anregen mit einem Halbleitergenerator M230 der Firma STS statt. Zur induktiven Anregung des Klebstoffes in der Klebverbindung wird eine wassergekühlte Flachspule mit drei Windungen und einem Durchmesser von 8 cm verwendet. Die Spule wird auf das Fügeteil aus Polypropylen aufgesetzt und der Klebstoff bei einer Leistung von 1000 W und einer Einwirkzeit von 10 min gehärtet. Die Proben haben eine Zug-Scher-Festigekeit von 10,4 ± 0,6 MPa bei einem kohäsiven Bruch des Klebstoffes.

Zum Vergleich werden Zug-Scher-Proben mit dem nicht modifizierten Klebstoff gefertigt. Bei diesen wird der Klebstoff in konventioneller Weise nach Herstellerangabe gehärtet. Die Härtung erfolgt in 30 min bei 180°C im Ofen. Die Zug-Scher-Festigkeit dieser Proben ist 10,1 ± 0,4 MPa.

### Beispiel 6: Modifikation eines Schmelzklebstoffes zum selektiven Lösen von Klebverbindungen

Der Schmelzklebstoff B40166 (Heinrich Bühnen GmbH) wird in einem Brabender Doppelschneckenextruder mit 7 Gew.-% Eisenoxid-Siliciumdioxid-Kompositpartikel nach Tabelle 1 bei einer Schneckendrehzahl von 60 Upm und einer Schneckentemperatur von 220°C in allen Heizzonen modifiziert. Der Schmelzklebstoff wird granuliert und mit einer HB 500 Auftragsanlage auf 5mm dickes Buchensperrholz appliziert. Es wird sofort ein zweites Stück Buchensperrholz aufgedrückt. Die Verbindung ist innerhalb einer Minute fest. Das Lösen der Klebverbindung erfolgt induktiv mit dem Halbleitergenerator M230 der Firma STS und einer wassergekühlte Flachspule mit drei Windungen und einem Durchmesser von 8 cm. Die Spule wird auf das Sperrholz aufgelegt und eine Leistung von 3000 W am Halbleitergenerator eingestellt. Nach einer Einwirkzeit von 60 s lassen sich die beiden Sperrholzplatten voneinander lösen und nach erneutem induktivem Aufheizen wieder miteinander verbinden.

## Patentansprüche

1. Klebstoffzusammensetzung zur Herstellung von Duromeren, die mittels eines elektrischen Feldes, magnetischen Feldes, elektromagnetischen Feldes, elektrischen Wechselfeldes, magnetischen Wechselfeldes oder elektromagnetischen Wechselfeldes erwärmbar ist, enthaltend ein Polymer, ein Polymergemisch oder ein Reaktionsharz, und Vernetzerpartikel, wobei die Vernetzerpartikel aus Füllstoffpartikeln, die ferromagnetisch, ferrimagnetisch, superparamagnetisch oder paramagnetisch sind, und an diese Füllstoffpartikel chemisch gebundenen Vernetzereinheiten bestehen.

2. Klebstoffzusammensetzung nach Anspruch 1, **dadurch gekennzeichnet, dass** der Gehalt der Vernetzerpartikel 0,1 Gew.-% bis 80 Gew.-%, bevorzugt 0,5 Gew.-% bis 40 Gew.-% und besonders bevorzugt 1 Gew.-% bis 30 Gew.-% beträgt.

3. Klebstoffzusammensetzung nach den Ansprüchen 1 oder 2, **dadurch gekennzeichnet, dass** die Vernetzerpartikel durchschnittliche Primärpartikelgrößen zwischen 2 nm und 1000 nm, bevorzugt zwischen 2nm und 500 nm und besonders bevorzugt zwischen 2 nm und 100 nm aufweisen.

4. Klebstoffzusammensetzung nach den Ansprüchen 1 bis 3, **dadurch gekennzeichnet, dass** die Vernetzerpartikel bezogen auf ihre Oberfläche mindestens 0,00001 mmol*m⁻² vernetzend wirkende funktionelle Gruppen aufweisen.

5. Klebstoffzusammensetzung nach den Ansprüchen 1 bis 4, **dadurch gekennzeichnet, dass** die Füllstoffpartikel oberflächenmodifiziert sind.

6. Klebstoffzusammensetzung nach den Ansprüchen 1 bis 5, **dadurch gekennzeichnet, dass** die Füllstoffpartikel ausgewählt werden aus der Gruppe bestehend aus Eisen, Eisenlegierungen, und eisenhaltigen Metalloxiden.

7. Klebstoffzusammensetzung nach Anspruch 5, **dadurch gekennzeichnet, dass** die Füllstoffpartikel eine Kern-Schale-Struktur aufweisen und über Sol-Gel-Prozesse oder aus der Reaktion von nanoskaligem Eisenoxid mit Natronwasserglas hergestellt werden.

8. Klebstoffzusammensetzung nach Anspruch 5, **dadurch gekennzeichnet, dass** die Füllstoffpartikel ein flammpyrolytisch hergestelltes superparamagnetische Eisenoxid-Siliciumdioxid-Kompositpartikel sind.

9. Klebstoffzusammensetzung nach den Ansprüchen 1 bis 8, **dadurch gekennzeichnet, dass** die Vernetzereinheiten über eine thermisch labile Gruppe an die Füllstoffpartikel gebunden sind.

10. Klebstoffzusammensetzung nach Anspruch 9, **dadurch gekennzeichnet, dass** die thermisch labile Gruppe eine Azogruppe, eine Carbonatgruppe oder eine Ethylengruppe mit sterisch anspruchsvollen Substituenten ist.

11. Klebstoffzusammensetzung zur Herstellung von Duromeren nach den Ansprüchen 1 bis 8, **dadurch gekennzeichnet, dass** zusätzlich eine thermisch labile Substanz enthalten ist.

12. Klebstoffzusammensetzung nach Anspruch 11, **dadurch gekennzeichnet, dass** die thermisch labile Substanz durchschnittliche Partikelgrößen zwischen 2 nm und 100 µm, bevorzugt zwischen 2nm und 1 µm und besonders bevorzugt zwischen 2 nm und 200 nm aufweist.

13. Klebstoffzusammensetzung nach den Ansprüchen 11 oder 12, **dadurch gekennzeichnet, dass** die thermisch labile Substanz ein Treibmittel ist, das unter Wärmeeinwirkung ein Gas bildet, wobei die Gasbildungstemperatur höher ist als die Temperatur, bei der die Vernetzung der Klebstoffzusammensetzung einsetzt.

14. Klebstoffzusammensetzung nach Anspruch 13, **dadurch gekennzeichnet, dass** das Treibmittel ausgewählt wird aus der Gruppe bestehend aus Azodicarbonamid und den Sulfohydraziden, insbesondere Toluolsulfohydrazid und Oxy-bis(benzosulfohydrazid).

15. Klebstoffzusammensetzung nach den Ansprüchen 13 oder 14, **dadurch gekennzeichnet, dass** Kollektivpartikel enthalten sind, die das Treibmittel und die Füllstoffpartikel enthalten und durch Fällen, Pressen, Mikroverkapseln oder Binden von Treibmittel und Füllstoffpartikeln mit einem Polymer erhältlich sind.

16. Klebstoffzusammensetzung nach Anspruch 15, **dadurch gekennzeichnet, dass** das Polymer zur Bildung der Kollektivpartikel aufschäumbares Polystyrol ist.

17. Verwendung der Klebstoffzusammensetzung nach den Ansprüchen 1 bis 16 für Klebstoffe, Lacke, Dichtstoffe, Primer, Matrixharze oder Vergussharze.

18. Verfahren zum Aushärten einer Klebstoffzusammensetzung den Ansprüchen 1 bis 16, **dadurch gekennzeichnet, dass** die Klebstoffzusammensetzung mittels eines elektrischen Feldes, magnetischen Feldes, elektromagnetischen Feldes, elektrischen Wechselfeldes, magnetischen Wechselfeldes oder elektromagnetischen Wechselfeldes induktiv auf eine Temperatur erwärmt wird, bei der die Vernetzung der Klebstoffzusammensetzung einsetzt.

19. Adhäsivverbund, der mindestens eine Klebstoffschicht aufweist, die durch Aushärtung der Klebstoffzusammensetzung nach einem oder mehreren der Ansprüche 1 bis 16 erhältlich ist.

20. Adhäsivverbund nach Anspruch 19, **dadurch gekennzeichnet, dass** die mindestens eine Klebstoffschicht eine Lackschicht oder Primerschicht ist.

21. Adhäsivverbund nach den Ansprüchen 19 oder 20, der eine Klebverbindung, ein Vergussbauteil, ein abgedichtetes Bauteil oder ein Polymerlaminat ist.

22. Verfahren zum thermischen Lösen eines Adhäsivverbunds, der durch Härtung der Klebstoffzusammensetzung nach den Ansprüchen 1 bis 8 erhältlich ist, **dadurch gekennzeichnet, dass** die ausgehärtete Schicht der Klebstoffzusammensetzung mittels eines elektrischen Feldes, magnetischen Feldes, elektromagnetischen Feldes, elektrischen Wechselfeldes, magnetischen Wechselfeldes oder elektromagnetischen Wechselfeldes auf eine Temperatur erwärmt wird, die über der Ceilingtemperatur der Vernetzungspunkte liegt.

23. Verfahren zum thermischen Lösen eines Adhäsivverbunds, der durch Härtung der Klebstoffzusammensetzung nach den Ansprüchen 9 bis 16 erhältlich ist, **dadurch gekennzeichnet, dass** die ausgehärtete Schicht der Klebstoffzusammensetzung mittels eines elektrischen Feldes, magnetischen Feldes, elektromagnetischen Feldes, elektrischen Wechselfeldes, magnetischen Wechselfeldes oder elektromagnetischen Wechselfeldes auf eine Temperatur erwärmt wird, bei der die thermisch labilen Bindungen einer thermisch labilen Substanz und/oder thermisch labilen Gruppe brechen.

24. Verwendung des Verfahrens nach den Ansprüchen 22 oder 23 zum Abbeizen von Lacken.

25. Verwendung nach Anspruch 24 im Flugzeugbau und Schiffsbau.

## Claims

1. Adhesive composition for the production of thermosets, the composition being able to be heated by means of an electrical field, magnetic field, electromagnetic field, alternating electrical field, alternating magnetic field or alternating electromagnetic field and containing a polymer, a polymer mixture or a reaction resin, and crosslinking agent particles, the crosslinking agent particles comprising filler particles that are ferromagnetic, ferrimagnetic, superparamagnetic or paramagnetic, and crosslinking agent units chemically bound to these filler particles.

2. Adhesive composition according to Claim 1, **characterized in that** the content of crosslinking agent particles is 0.1. wt.% to 80. wt.%, preferably 0.5. wt.% to 40. wt.% and with particular preference 1. wt.% to 30. wt.%.

3. Adhesive composition according to Claims 1 or 2, **characterized in that** the crosslinking agent particles have average primary particle sizes between 2 nm and 1000 nm, preferably between 2 nm and 500 nm and with particular preference between 2 nm and 100 nm.

4. Adhesive composition according to Claims 1 to 3, **characterized in that** the crosslinking agent particles have, with respect to their surface, at least 0.00001 mmol*m⁻² of functional groups with a crosslinking action.

5. Adhesive composition according to Claims 1 to 4, **characterized in that** the filler particles are surface-modified.

6. Adhesive composition according to Claims 1 to 5, **characterized in that** the filler particles are selected from the group consisting of iron, iron alloys, and iron-containing metal oxides.

7. Adhesive composition according to Claim 5, **characterized in that** the filler particles have a core-shell structure and are produced by sol-gel processes or from the reaction of nanoscale iron oxide with sodium silicate.

8. Adhesive composition according to Claim 5, **characterized in that** the filler particles are superparamagnetic iron oxide-silicon dioxide composite particles produced by flame pyrolysis.

9. Adhesive composition according to Claims 1 to 8, **characterized in that** the crosslinking agent units are bound via a thermally labile group to the filler particles.

10. Adhesive composition according to Claim 9, **characterized in that** the thermally labile group is an azo group, a carbonate group or an ethylene group with sterically bulky substituents.

11. Adhesive composition for the production of thermosets according to Claims 1 to 8, **characterized in that** it further comprises a thermally labile substance.

12. Adhesive composition according to Claim 11, **characterized in that** the thermally labile substance has average particle sizes between 2 nm and 100 µm, preferably between 2 nm and 1 µm and with particular preference between 2 nm and 200 nm.

13. Adhesive composition according to Claims 11 or 12, **characterized in that** the thermally labile substance is a blowing agent that forms gas under the action of heat, in which the gas formation temperature is higher than the temperature at which the crosslinking of the adhesive composition starts.

14. Adhesive composition according to Claim 13, **characterized in that** the blowing agent is selected from the group consisting of azodicarbonamide and the sulphohydrazides, especially toluenesulphohydrazide and oxybis(benzosulphohydrazide).

15. Adhesive composition according to Claims 13 or 14, **characterized in that** collective particles are included that contain the blowing agent and the filler particles and are obtainable by precipitation, compression, microencapsulation or bonding of blowing agent and filler particles with a polymer.

16. Adhesive composition according to Claim 15, **characterized in that** the polymer for the formation of the collective particles is expandable polystyrene.

17. Use of the adhesive composition according to Claims 1 to 16 for adhesives, paints, sealants, primers, matrix resins or casting resins.

18. Process for the curing of an adhesive composition according to Claims 1 to 16, **characterized in that** the adhesive composition is inductively heated by means of an electrical field, magnetic field, electromagnetic field, alternating electrical field, alternating magnetic field or alternating electromagnetic field to a temperature at which the crosslinking of the adhesive composition starts.

19. Adhesive composite that comprises at least one adhesive layer obtainable by curing the adhesive composition according to one or more of Claims 1 to 16.

20. Adhesive composite according to Claim 19, **characterized in that** the at least one adhesive layer is a paint layer or primer layer.

21. Adhesive composite according to Claims 19 or 20, that is a bonded joint, a cast structural part, a sealed structural part or a polymer laminate.

22. Process for the thermal dissociation of an adhesive composite that can be obtained by curing the adhesive composition according to Claims 1 to 8, **characterized in that** the hardened layer of the adhesive composition is heated by means of an electrical field, magnetic field, electromagnetic field, alternating electrical field, alternating magnetic field or alternating electromagnetic field to a temperature that lies above the ceiling temperature of the crosslinking points.

23. Process for the thermal dissociation of an adhesive composite that can be obtained by curing the adhesive composition according to Claims 9 to 16, **characterized in that** the hardened layer of the adhesive composition is heated by means of an electrical field, magnetic field, electromagnetic field, alternating electrical field, alternating magnetic field or alternating electromagnetic field to a temperature at which the thermally labile bonds of a thermally labile substance and/or thermally labile group rupture.

24. Use of the process according to Claims 22 or 23 for pickling paints.

25. Use according to Claim 24 in aircraft construction and shipbuilding.

## Revendications

1. Composition adhésive pour la fabrication de duromères, qui peut être chauffée au moyen d'un champ électrique, d'un champ magnétique, d'un champ électromagnétique, d'un champ électrique alternatif, d'un champ magnétique alternatif ou d'un champ électromagnétique alternatif, contenant un polymère, un mélange de polymères ou une résine composite et des particules d'agent de réticulation, les particules d'agent de réticulation étant constituées de particules de charge, qui sont ferromagnétiques, ferrimagnétiques, superparamagnétiques ou paramagnétiques, et d'unités d'agent de réticulation liées chimiquement à ces particules de charge.

2. Composition adhésive selon la revendication 1, **caractérisée en ce que** la teneur en particules d'agent de réticulation est de 0,1% en poids à 80% en poids, de préférence, de 0,5% en poids à 40% en poids et, mieux encore, de 1% en poids à 30% en poids.

3. Composition adhésive selon les revendications 1 ou 2, **caractérisée en ce que** les particules d'agent de réticulation présentent des tailles particulaires primaires moyennes comprises entre 2 nm et 1000 nm, de préférence, entre 2 nm et 500 nm et, mieux encore, entre 2 nm et 100 nm.

4. Composition adhésive selon l'une quelconque des revendications 1 à 3, **caractérisée en ce que** les particules d'agent de réticulation présentent, par rapport à leur surface, au moins 0,00001 mmole*m⁻² de groupements fonctionnels exerçant un effet de réticulation.

5. Composition adhésive selon l'une quelconque des revendications 1 à 4, **caractérisée en ce que** les particules de charge sont modifiées en surface.

6. Composition adhésive selon l'une quelconque des revendications 1 à 5, **caractérisée en ce que** les particules de charge sont choisies dans le groupe constitué du fer, d'alliages du fer et d'oxydes métalliques contenant du fer.

7. Composition adhésive selon la revendication 5, **caractérisée en ce que** les particules de charge présentent une structure noyau-enveloppe et **en ce qu'**elles sont fabriquées par des procédés de type sol-gel ou en faisant réagir à l'échelle nanométrique de l'oxyde de fer avec du silicate de soude.

8. Composition adhésive selon la revendication 5, **caractérisée en ce que** les particules de charge sont représentées par une particule composite super-paramagnétique de composition oxyde de fer-dioxyde de silicium, fabriquée par pyrolyse avec flamme.

9. Composition adhésive selon les revendications 1 à 8, **caractérisée en ce que** les unités d'agent de réticulation sont liées aux particules de charge par le biais d'un groupement thermolabile.

10. Composition adhésive selon la revendication 9, **caractérisée en ce que** le groupement thermolabile est un groupement azo, un groupement carbonate ou un groupement éthylène, ayant des substituants exigeants sur le plan stérique.

11. Composition adhésive pour la fabrication de duromères selon les revendications 1 à 8, **caractérisée en ce qu'**elle contient en outre une substance thermolabile.

12. Composition adhésive selon la revendication 11, **caractérisée en ce que** la substance thermolabile présente des tailles particulaires moyennes comprises entre 2 nm et 100 µm, de préférence, entre 2 nm et 1 µm et, mieux encore, entre 2 nm et 200 nm.

13. Composition adhésive selon les revendications 11 ou 12, **caractérisée en ce que** la substance thermolabile est un agent moussant qui forme un gaz sous l'effet de la chaleur, la température de la formation du gaz étant supérieure à celle à laquelle se déclenche la réticulation de la composition adhésive.

14. Composition adhésive selon la revendication 13, **caractérisée en ce que** l'agent moussant est choisi dans le groupe constitué de l'azodicarbonamide et des sulfohydrazides, en particulier, du toluènesulfohydrazide et de l'oxy-bis-(benzosulfohydrazide).

15. Composition adhésive selon les revendications 13 ou 14, **caractérisée en ce qu'**elle contient des particules collectives qui contiennent l'agent moussant et les particules de charge et que l'on peut obtenir par précipitation, compression, microencapsulation ou liaison de l'agent moussant et des particules de charge avec un polymère.

16. Composition adhésive selon la revendication 15, **caractérisée en ce que** le polymère prévu pour la formation des particules collectives est un polystyrène expansible.

17. Utilisation de la composition adhésive selon les revendications 1 à 16 pour des adhésifs, des vernis, des masses d'étanchéité, des couches de fond, des résines de matrice ou des résines à sceller.

18. Procédé pour durcir une composition adhésive selon les revendications 1 à 16, **caractérisé en ce que** la composition adhésive est chauffée par induction au moyen d'un champ électrique, d'un champ magnétique, d'un champ électromagnétique, d'un champ électrique alternatif, d'un champ magnétique alternatif ou d'un champ électromagnétique alternatif, à une température à laquelle se déclenche la réticulation de la composition adhésive.

19. Composite adhésif présentant au moins une couche adhésive que l'on peut obtenir en durcissant la composition adhésive selon l'une quelconque au plusieurs des revendications 1 à 16.

20. Composite adhésif selon la revendication 19, **caractérisé en ce que** la au moins une couche adhésive est une couche de vernis ou une couche de fond.

21. Composite adhésif selon les revendications 19 ou 20, qui est un joint collé, un composant de scellage, un composant de colmatage ou un stratifié polymère.

22. Procédé pour dissoudre par voie thermique un composite adhésif que l'on peut obtenir par durcissement de la composition adhésive selon les revendications 1 à 8, **caractérisé en ce que** l'on chauffe la couche durcie de la composition adhésive au moyen d'un champ électrique, d'un champ magnétique, d'un champ électromagnétique, d'un champ électrique alternatif, d'un champ magnétique alternatif ou d'un champ électromagnétique alternatif, à une température qui se situe au-dessus de la température plafond des points de réticulation.

23. Procédé pour dissoudre par voie thermique un composite adhésif, que l'on peut obtenir en durcissant la composition adhésive selon les revendications 9 à 16, **caractérisé en ce que** l'on chauffe la couche durcie de la composition adhésive au moyen d'un champ électrique, d'un champ magnétique, d'un champ électromagnétique, d'un champ électrique alternatif, d'un champ magnétique alternatif ou d'un champ électromagnétique alternatif, à une température à laquelle se rompent les liaisons thermolabiles d'une substance thermolabile et/ou d'un groupement thermolabile.

24. Utilisation du procédé selon les revendications 22 ou 23 pour le décapage de vernis.

25. Utilisation selon la revendication 24 dans la construction aéronautique et dans la construction navale.
